# EUROPÄISCHE PATENTANMELDUNG

(11) **EP 3 431 339 A1**
(43) Veröffentlichungstag der Anmeldung: **23.01.2019**
(21) Anmeldenummer: 18020286.3
(22) Anmeldetag: 28.06.2018
(51) Int. Cl.: B60R 5/04

(54) **ABDECKVORRICHTUNG ZUR ABDECKUNG EINES KOFFERRAUMS**

(30) Priorität: 19.07.2017 DE 102017116296
(71) Anmelder: Dr. Ing. h.c. F. Porsche AG, 70435 Stuttgart (DE)
(72) Erfinder: Düpjohann, Reinhard, 71272 Renningen-Malmsheim (DE)

(57) **Zusammenfassung**

Die Erfindung betrifft eine Abdeckvorrichtung (50) zur Abdeckung eines Kofferraums eines Fahrzeugs mit einem länglichen Rollogehäuse (52) mit einem darin aufrollbar gehaltenen Rollo zur Abdeckung des Kofferraums, wenigstens einem Befestigungselement (54), das an einem Endbereich (56) des Rollogehäuses (52) derart angeordnet ist, dass es in einer Längsrichtung des Rollogehäuses (52) gegen eine Federkraft zwischen einer vorgeschobenen Einbauposition, in der die Abdeckvorrichtung (50) mit dem wenigstens einen Befestigungselement (54) zwischen Seitenteilen des Fahrzeugs anbringbar ist, und einer zurückgezogenen Entnahmeposition, in der die Abdeckvorrichtung (50) zwischen den Seitenteilen entnehmbar ist, translatorisch bewegbar ist, und wenigstens einem beweglich gelagerten Betätigungshebel (62), der dem wenigstens einen Befestigungselement (54) gekoppelt ist, um das Befestigungselement (54) aus der Einbauposition in die Entnahmeposition zu bewegen, wobei der Betätigungshebel (62) mit einem Begrenzungselement (78) derart gekoppelt ist, dass das Begrenzungselement (78) durch eine Bewegung des Betätigungshebels (62) zwischen einer Begrenzungsposition, in der das Begrenzungselement (78) eine Relativbewegung des Befestigungselements (54) in Richtung zu dem Rollogehäuse (52) begrenzt, und einer Freigabeposition, in der es die Relativbewegung freigibt, bewegbar ist. Die Erfindung betrifft außerdem ein Fahrzeug mit einer obigen Abdeckvorrichtung (50).

## Beschreibung

Die vorliegende Erfindung betrifft eine Abdeckvorrichtung zur Abdeckung eines Kofferraums eines Fahrzeugs, mit einem länglichen Rollogehäuse mit einem darin aufrollbar gehaltenen Rollo zur Abdeckung des Kofferraums, wenigstens einem Befestigungselement, das an einem Endbereich des Rollogehäuses derart angeordnet ist, dass es in einer Längsrichtung des Rollogehäuses gegen eine Federkraft zwischen einer vorgeschobenen Einbauposition, in der die Abdeckvorrichtung mit dem wenigstens ein Befestigungselement zwischen Seitenteilen des Fahrzeugs anbringbar ist, und einer zurückgezogenen Entnahmeposition, in der die Abdeckvorrichtung zwischen den Seitenteilen entnehmbar ist, translatorisch bewegbar ist, und wenigstens einem beweglich gelagerten Betätigungshebel, der mit dem wenigstens einen Befestigungselement gekoppelt ist, um das Befestigungselement aus der Einbauposition in die Entnahmeposition zu bewegen.

Erfindungsgemäß ist ebenfalls ein Fahrzeug mit einer obigen Abdeckvorrichtung angegeben.

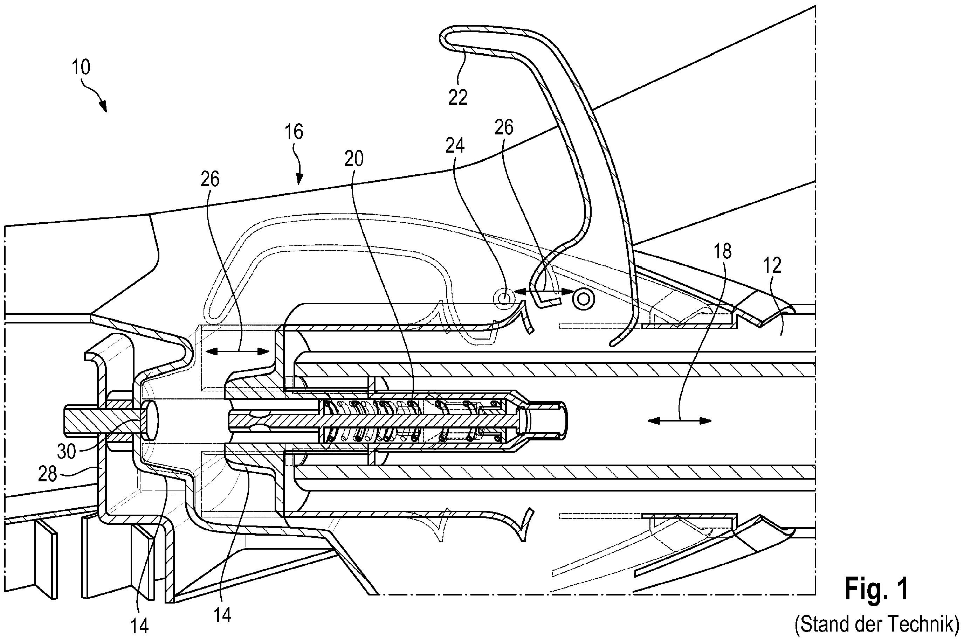

Eine derartige, aus dem Stand der Technik bekannte Abdeckvorrichtung 10 ist beispielhaft in Fig. 1 gezeigt. Die Abdeckvorrichtung 10 umfasst ein längliches Rollogehäuse 12 mit einem darin aufrollbar gehaltenen Rollo zur Abdeckung eines Kofferraums. Das Rollo ist hier zur besseren Übersichtlichkeit nicht dargestellt. Die Abdeckvorrichtung 10 umfasst weiterhin ein Befestigungselement 14, das an einem Endbereich 16 des Rollogehäuses 12 angeordnet ist. Wie in Fig. 1 dargestellt, ist das Befestigungselement 14 in einer Längsrichtung 18 des Rollogehäuses 12 zwischen einer vorgeschobenen Einbauposition und einer zurückgezogenen Entnahmeposition translatorisch bewegbar.

Die Abdeckvorrichtung 10 umfasst außerdem eine Druckfeder 20. Das Befestigungselement 14 wird zwischen der vorgeschobenen Einbauposition und der zurückgezogenen Entnahmeposition translatorisch gegen die Kraft der Druckfeder 20 bewegt.

Außerdem, umfasst die Abdeckvorrichtung 10 einen drehbar gelagerten Betätigungshebel 22, der mit dem Befestigungselement 14 gekoppelt ist, um das Befestigungselement 14 aus der Einbauposition in die Entnahmeposition zu bewegen. Dabei wird der Betätigungshebel 22 um eine Drehachse 24 verschwenkt, wobei der Betätigungshebel 22 und das Befestigungselement 14 entlang der Pfeile 26 gemeinsam in der Längsrichtung 18 verschoben werden. Beim Loslassen des Betätigungshebels 22 werden der Betätigungshebel 22 und das Befestigungselement 14 durch die Rückstellkraft der Druckfeder 20 gemeinsam entlang der Pfeile 26 in der Längsrichtung 18 verschoben, bis das Befestigungselement 14 wieder seine Einbauposition erreicht hat.

Mit dem Befestigungselement 14 in der Entnahmeposition kann die Abdeckvorrichtung 10 in das Fahrzeug eingesetzt werden, wobei die Abdeckvorrichtung 10 mit dem Befestigungselement 14 zwischen Seitenteilen 28 des Fahrzeugs in einer Aufnahme 30 befestigt werden, indem das Befestigungselement 14 in seine Einbauposition überführt wird. In der Einbauposition kann das Befestigungselement 14 aufgrund der Druckfeder 20 Stöße und Vibrationen beim Fahren des Fahrzeugs ausgleichen.

Dabei ist wichtig, dass das Befestigungselement z.B. im Falle eines Unfalls, insbesondere eines Seitencrashs, nicht aus der Aufnahme springen kann, um ein davon ausgehendes Verletzungsrisiko zu vermeiden.

Um dies zu gewährleisten, ist beispielswese bekannt, im Bereich des Befestigungselements ein feststehendes und an dem Rollogehäuse gehaltenes Anschlagteil vorzusehen, welches das Abdeckrollo unabhängig von dem Befestigungselement gegen dynamische Seitenkräfte zur Seitenwand abstützt. Daran ist allerdings nachteilig, dass ein Entnehmen des Abdeckrollos aus dem Fahrzeug durch das feststehende und ggf. über das in der zurückgezogenen Entnahmeposition über das Befestigungselement herausragende Anschlagteil erschwert oder behindert werden kann.

In diesem Zusammenhang ist aus der DE 196 21 009 C1 eine Laderaumabdeckung mit axial beweglichen Gehäuseseitenteilen zur Festlegung in fahrzeugfesten Halterungen bekannt. Dabei ist wenigstens einem Gehäuseseitenteil eine Sperrvorrichtung zugeordnet, die mit dem Erreichen der Arretierposition des Gehäuseseitenteiles aus einer Ruhepositon in eine Wirkposition überführbar ist, in der die Sperrvorrichtung auf das Gehäuseseitenteil relativ zur Gehäuselängsachse eine die Federkraft ergänzende, zusätzliche Rückhaltekraft ausübt.

Weiter ist aus der DE 197 36 170 C1 ein Abdeckrollo bekannt, dass zwei aufeinander zu bewegbare Endkappen aufweist. Die Bewegung der Endkappen ermöglicht die schwimmende Zentrierung der Wickelwelle und der Rollobahn zwischen den Seitenwänden des Fahrzeugs. Darüber hinaus wird die Bewegbarkeit der Endkappen aufeinander zu bzw. voneinander weg dazu verwendet, um das Abdeckrollo in entsprechenden fahrzeugseitigen Aufnahmetaschen zu verriegeln bzw. aus diesen herausnehmen zu können. Da die zur Verriegelung erforderliche Vorspannkraft, die zwischen den Endkappen wirksam ist und mittels der Wickelwelle übertragen wird, vergleichsweise groß und die ergonomische Handhabung ungünstig ist, ist eine Betätigungsmechanik vorhanden, über die die beiden Endkappen zusätzlich miteinander verbunden sind und zu der ein auf lediglich einer der Endkappen angeordnetes Betätigungsglied gehört. Dieses Betätigungsglied gestattet eine ergonomisch günstigere Handhabung und außerdem die Verwirklichung eines Übersetzungsverhältnisses, damit das Betätigungsglied leichter zu bewegen ist, als es den Kräften der Vorspannfedern entspricht.

Auch ist aus der EP 1 447 275 B1 ein Kraftfahrzeug mit einer Schutzvorrichtung für einen Laderaum des Kraftfahrzeuges bekannt. Die Schutzvorrichtung weist wenigstens eine Wickelwelle auf, die zwischen zwei Gehäuseseitenteilen gelagert ist, die einander zwischen einer in fahrzeugfesten Halterungen fixierten Funktionsposition der Schutzvorrichtung und einer Entnahmeposition der Schutzvorrichtung in Längsrichtung einer Wickelachse der Wickelwelle koaxial beweglich zugeordnet sind. Wenigstens ein Gehäuseseitenteil ist mit der korrespondierenden fahrzeugfesten Halterung durch eine mechanische Sicherungseinrichtung lösbar formschlüssig - auf die Längsrichtung der Wickelachse bezogen - verriegelt.

Ausgehend von dem oben genannten Stand der Technik liegt der Erfindung somit die Aufgabe zugrunde, eine Abdeckvorrichtung zur Abdeckung eines Kofferraums eines Fahrzeugs sowie ein Fahrzeug mit einer solchen Abdeckvorrichtung der oben genannten Art anzugeben, die insbesondere im Falle eines Unfalls ein Herausspringen der Abdeckvorrichtung aus ihrer Halterung verhindern und gleichzeitig eine einfache Handhabung der Abdeckvorrichtung zum einfachen Entnehmen und Einführen der Abdeckvorrichtung ermöglichen kann.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine Abdeckvorrichtung zur Abdeckung eines Kofferraums eines Fahrzeugs angegeben, mit einem länglichen Rollogehäuse mit einem darin aufrollbar gehaltenen Rollo zur Abdeckung des Kofferraums, wenigstens einem Befestigungselement, das an einem Endbereich des Rollogehäuses derart angeordnet ist, dass es in einer Längsrichtung des Rollogehäuses gegen eine Federkraft zwischen einer vorgeschobenen Einbauposition, in der die Abdeckvorrichtung mit dem wenigstens einen Befestigungselement zwischen Seitenteilen des Fahrzeugs anbringbar ist, und einer zurückgezogenen Entnahmeposition, in der die Abdeckvorrichtung zwischen den Seitenteilen entnehmbar ist, translatorisch bewegbar ist, und wenigstens einem beweglich gelagerten Betätigungshebel, der dem wenigstens einen Befestigungselement gekoppelt ist, um das Befestigungselement aus der Einbauposition in die Entnahmeposition zu bewegen, wobei der Betätigungshebel mit einem Begrenzungselement derart gekoppelt ist, dass das Begrenzungselement durch eine Bewegung des Betätigungshebels zwischen einer Begrenzungsposition, in der das Begrenzungselement eine Relativbewegung des Befestigungselements in Richtung zu dem Rollogehäuse begrenzt, und einer Freigabeposition, in der es die Relativbewegung freigibt, bewegbar ist.

Erfindungsgemäß ist ebenfalls ein Fahrzeug mit einer obigen Abdeckvorrichtung angegeben.

Grundidee der vorliegenden Erfindung ist es also, das Befestigungselement selber in seiner Einbauposition derart in seiner Einbauposition zu fixieren, dass die Abdeckvorrichtung zuverlässig in dem Fahrzeug gehalten werden kann. Durch das bewegliche Begrenzungselement wird dabei erreicht, dass das Befestigungselement nur in der Einbauposition durch das Begrenzungselement fixiert wird, und ohne Einschränkungen in die Entnahmeposition bewegt werden kann. Da das Begrenzungselement durch das Betätigungselement beweglich ist, kann das Befestigungselement in der Einbauposition zuverlässig gehalten werden, während das Befestigungselement ohne weiteres in die zurückgezogene Entnahmeposition bewegt werden kann, indem durch eine Betätigung des Betätigungselements das Begrenzungselement in eine Position überführt wird, die Freigabeposition, in der es die Bewegung des Befestigungselements nicht beeinträchtigt.

Das Rollogehäuse hat eine längliche Form zur entsprechenden Aufnahme des Rollos. Das Rollogehäuse kann dabei einem im Wesentliche runden oder aber auch einen anderen Querschnitt aufweisen. Das Rollogehäuse ist zentraler Bestandteil der Abdeckvorrichtung.

Das Rollo ist üblicherweise derart aufrollbar in dem Rollogehäuse gehalten, dass es an einem Ende auf einer Welle fixiert ist, und durch die Kraft einer Rückstellfeder auf der Welle in dem Rollogehäuse aufgewickelt wird. Wird das Rollo zur Abdeckung des Kofferraums verwendet, so wird es an einem Ende, das stets außerhalb des Rollogehäuses positioniert ist, aus diesem herausgezogen und oberhalb des Kofferraums positioniert.

Das wenigstens eine Befestigungselement, mit dem die Abdeckvorrichtung zwischen Seitenteilen des Fahrzeugs angebracht werden kann, ist translatorisch zwischen der Einbauposition und der Entnahmeposition bewegbar. Die Bewegung erfolgt in Längsrichtung der Abdeckvorrichtung bzw. des Rollogehäuses, die durch deren Form eindeutig definiert ist.

Die Federkraft wird von einer Feder, die eine Druckfeder oder eine Zugfeder sein kann, aufgebracht. Dies erleichtert die Handhabung der Abdeckvorrichtung, insbesondere beim Einbau, da die Abdeckvorrichtung quasi selbstständig in dem Fahrzeug montiert wird. Es kann beispielsweise lediglich erforderlich sein, die Abdeckvorrichtung nach der Positionierung mit dem Betätigungshebel noch in der Einbauposition zu fixieren.

Die Feder ist vorzugsweise so angebracht, dass das Befestigungselement in Richtung zu der Einbauposition voreingestellt ist, um eine zuverlässige Anbringung der Abdeckvorrichtung in dem Fahrzeug zu gewährleisten.

In der Einbauposition ist das Befestigungselement in Längsrichtung von dem Rollogehäuse vorgeschoben, so dass die Länge der Abdeckvorrichtung vergrößert ist, um die Abdeckvorrichtung in dem Fahrzeug zu halten. In der Entnahmeposition ist das Befestigungselement gegenüber der Einbauposition zurückgezogen, so dass die Länge der Abdeckvorrichtung verkleinert ist.

Der Betätigungshebel ist derart angebracht, dass er in dem Fahrzeug in einem montierten Zustand der Abdeckvorrichtung von oben gut zugänglich ist. Durch die Kopplung mit Befestigungselement wird dieses durch eine Bewegung des Betätigungshebels ebenfalls bewegt. Die Art der Bewegung kann dabei prinzipiell unterschiedlich sein.

Das Begrenzungselement ist beispielsweise ein starres Element, das bei einer entsprechenden Positionierung eine Relativbewegung zwischen dem Befestigungselement und dem Rollogehäuse begrenzt.

Vorzugsweise korrespondieren die Begrenzungsposition und die Freigabeposition entsprechend mit der Einbauposition und der Entnahmeposition des Befestigungselements. Entsprechendes gilt für die Begrenzungsposition und die Freigabeposition des Begrenzungselements.

In vorteilhafter Ausgestaltung der Erfindung weist die Abdeckvorrichtung zwei Befestigungselemente auf, die an beiden Endbereichen des Rollogehäuses angeordnet sind, die Abdeckvorrichtung weist zwei beweglich gelagerte Betätigungshebel auf, wobei jeder Betätigungshebel mit einem Befestigungselement gekoppelt ist, um das entsprechende Befestigungselement aus seiner Einbauposition in seine Entnahmeposition zu bewegen, und jeder Betätigungshebel ist mit einem Begrenzungselement gekoppelt. Durch die Ausgestaltung der Abdeckvorrichtung mit zwei Befestigungselementen kann eine durch die Bewegung der Befestigungselemente resultierende Längenänderung der Abdeckvorrichtung maximiert werden. Außerdem ist zumindest ein Betätigungshebel auch beim Zugriff von jeder Seite des Fahrzeugs leicht erreichbar, wodurch die Handhabung der Abdeckvorrichtung verbessert wird.

In vorteilhafter Ausgestaltung der Erfindung ist der wenigstens eine Betätigungshebel verschwenkbar an dem Rollogehäuse gehalten. Der Betätigungshebel ist daher an einer Verschwenkachse gehalten, um welche der Betätigungshebel die Verschwenkbewegung durchführt. Eine Verschwenkbewegung kann auch in einem in dem Fahrzeug montierten Zustand leicht durchgeführt werden.

In vorteilhafter Ausgestaltung der Erfindung ist der wenigstens eine Betätigungshebel translatorisch verschiebbar an dem Rollogehäuse gehalten. Die translatorische Bewegung ist vorzugsweise eine Bewegung in Richtung der Längsachse des Rollogehäuses. Die translatorische Bewegung kann alleine oder in Kombination mit einer anderen Bewegung erfolgen, beispielsweise einer Dreh- oder einer Verschwenkbewegung.

In vorteilhafter Ausgestaltung der Erfindung ist der wenigstens eine Betätigungshebel mit dem Befestigungselement translatorisch verschiebbar. Die translatorische Bewegung des Befestigungselements ist also mit der translatorischen Bewegung des Betätigungshebels verbunden und erfolgt gemeinsam. Vorzugsweise ist die Bewegung synchron. Die Kopplung der Bewegung von Betätigungshebel und Befestigungselement ermöglicht eine zuverlässige und stabile Ausgestaltung der Abdeckvorrichtung. Vorzugsweise kann durch den Betätigungshebel selber eine Kraft gegen eine Feder ausgeübt werden, die das Befestigungselement in seine Einbauposition drängt.

In vorteilhafter Ausgestaltung der Erfindung ist das Begrenzungselement als Sperrstift, Haken, oder Bolzen ausgeführt. Entsprechend ausgestaltete Begrenzungselemente können einfach hergestellt und verwendet werden.

In vorteilhafter Ausgestaltung der Erfindung weist die Abdeckvorrichtung wenigstens eine Aussparung auf, in der das Begrenzungselement in der Begrenzungsposition form- und kraftschlüssig aufgenommen ist. Die Aufnahme ist vorzugsweise an dem Rollogehäuse ausgeführt. Die Aufnahme ermöglicht eine zuverlässige Positionierung des Begrenzungselements, so dass dieses auch bei starken Kräften in der Längsrichtung der Abdeckvorrichtung in seiner Position verbleiben und eine Relativbewegung des Befestigungselements in Richtung zu dem Rollogehäuse begrenzen kann.

In vorteilhafter Ausgestaltung der Erfindung ist das Begrenzungselement an dem Betätigungshebel angebracht. Das Befestigungselement wird also unmittelbar mit dem Betätigungshebel bewegt. Das Befestigungselement kann beispielsweise bei einem verschwenkbaren Befestigungshebel zumindest näherungsweise radial zu seiner Verschwenkachse angebracht sein.

In einer alternativen Ausführungsform ist das Begrenzungselement über wenigstens ein Koppelelement mit dem Betätigungshebel gekoppelt. Eine Bewegung des Begrenzungselements erfolgt also durch eine Bewegung des Betätigungshebels, wobei die beiden Bewegungen prinzipiell unterschiedlich ausgeführt sein können. Das Koppelelement kann dabei eine prinzipiell beliebige Form der Kopplung zwischen dem Begrenzungselement und dem Betätigungshebel bewirken.

In vorteilhafter Ausgestaltung der Erfindung begrenzt das Begrenzungselement in seiner Begrenzungsposition die Relativbewegung des Befestigungselements in Richtung zu dem Rollogehäuse derart, dass die Relativbewegung in einem Ausgleichsbereich ermöglicht ist, und darüber hinaus gesperrt ist. Es verbleibt also ein Spiel, das durch den Ausgleichsbereich definiert ist, so dass das Befestigungselement in der Einbauposition Stöße und Vibrationen beim Fahren des Fahrzeugs ausgleichen kann, aber auch herstellbedingte Toleranzen bezogen auf das Einbaumaß zwischen den Aufnahmen in den Seitenteilen links und rechts, insbesondere wenn das Befestigungselement durch eine Feder in die Einbauposition voreingestellt ist. Der Ausgleichsbereich umfasst üblicherweise einen Bereich, der weniger als der Hälfte eines Abstands des Befestigungselements zwischen seiner Einbauposition und seiner Entnahmeposition entspricht, vorzugsweise weniger als 25 Prozent, besonders bevorzugt weniger als 10 Prozent.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
Fig. 1: eine Schnittansicht einer Abdeckvorrichtung aus dem Stand der Technik, und
Fig. 2: eine Schnittansicht durch eine Abdeckvorrichtung 50 gemäß einer ersten, bevorzugten Ausführungsform der Erfindung.

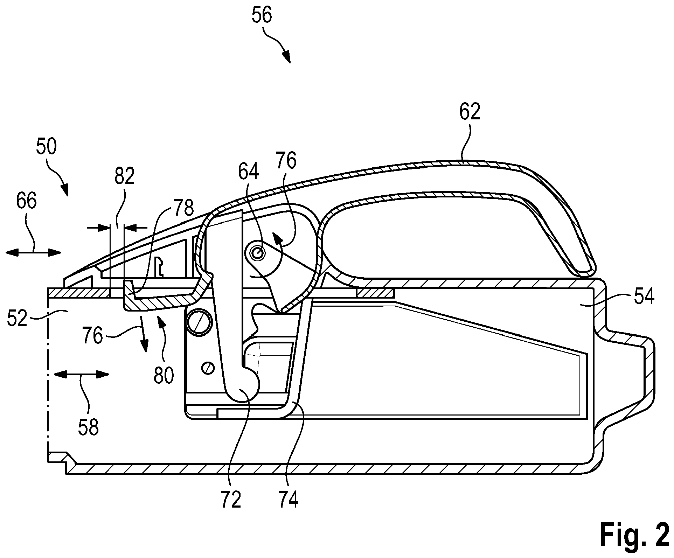

Die Figur 2 zeigt eine Abdeckvorrichtung 50 gemäß einer ersten, bevorzugten Ausführungsform der Erfindung.

Die Abdeckvorrichtung 50 umfasst ein längliches Rollogehäuse 52 mit einem darin aufrollbar gehaltenen Rollo zur Abdeckung eines Kofferraums. Das Rollo ist hier zur besseren Übersichtlichkeit nicht dargestellt. Die Abdeckvorrichtung 50 umfasst weiterhin zwei Befestigungselemente 54, die an beiden Endbereichen 56 des Rollogehäuses 52 angeordnet sind. Wie in Fig. 2 dargestellt, wobei dort nur ein Endbereich 56 mit dem entsprechenden Befestigungselement 54 dargestellt ist, sind die Befestigungselemente 54 in einer Längsrichtung 58 des Rollogehäuses 52 jeweils zwischen einer vorgeschobenen Einbauposition und einer zurückgezogenen Entnahmeposition translatorisch bewegbar.

Die Abdeckvorrichtung 50 umfasst außerdem hier nicht dargestellte Druckfedern, eine für jedes Befestigungselement. Die Befestigungselemente 54 werden jeweils aus der vorgeschobenen Einbauposition gegen die Kraft der Druckfeder in die zurückgezogene Entnahmeposition translatorisch bewegt.

Außerdem umfasst die Abdeckvorrichtung 50 zwei drehbar gelagerte Betätigungshebel 62, die mit den Befestigungselementen 54 gekoppelt sind, um die Befestigungselemente 54 jeweils aus der Einbauposition in die Entnahmeposition zu bewegen. Dabei werden die Betätigungshebel 62 jeweils um eine Drehachse 64 in Verschwenkrichtung 76 verschwenkt, wobei die Betätigungshebel 62 und Befestigungselemente 54 entlang des Pfeils 66 gemeinsam in der Längsrichtung 68 verschoben werden. Beim Loslassen des jeweiligen Betätigungshebels 62 werden der Betätigungshebel 62 und das Befestigungselement 54 durch die Rückstellkraft der Druckfeder gemeinsam entlang des Pfeils 66 in der Längsrichtung 58 verschoben, bis die Befestigungselemente 54 wieder ihre jeweilige Einbauposition erreicht haben.

Die Längsbewegung des Betätigungshebels 62 wird durch einen daran ausgebildeten Verschiebearm 72 realisiert, der beim Verschwenken des Betätigungshebels 62 an einem Ablaufelement 74 abläuft und den Betätigungshebel 62 mit dem jeweiligen Befestigungselement 54 in Richtung zu dem Rollogehäuse 52 drückt.

Mit dem Befestigungselement 54 in der Entnahmeposition kann die Abdeckvorrichtung 50 in das Fahrzeug eingesetzt werden, wobei die Abdeckvorrichtung 50 mit dem Befestigungselement 54 zwischen Seitenteilen 68 des Fahrzeugs in einer Aufnahme befestigt werden, indem das Befestigungselement 54 in seine Einbauposition überführt wird.

An dem Betätigungshebel 54 ist außerdem ein Begrenzungselement 78 angebracht. Das Begrenzungselement 78 ist ein starres Element, beispielsweise ein Sperrstift, Haken, oder Bolzen, das mit dem Betätigungshebel 54 in der Verschwenkrichtung 76 verschwenkbar ist. Dabei wird das Begrenzungselement 78 durch eine Bewegung des Betätigungshebels 62 zwischen einer Begrenzungsposition, in der das Begrenzungselement 78 eine Relativbewegung des Befestigungselements 54 in Richtung zu dem Rollogehäuse 52 begrenzt, und einer Freigabeposition, in der es die Relativbewegung freigibt, bewegt.

Außerdem weist die Abdeckvorrichtung 50 eine Aussparung 80 auf, in der das Begrenzungselement 78 in der Begrenzungsposition form- und kraftschlüssig aufgenommen ist. Die Aufnahme 80 ist vorzugsweise an dem Rollogehäuse 52 ausgeführt.

Bei der Positionierung des Begrenzungselements 78 in der Aussparung 80 wird die Aussparung 80 in Längsrichtung 78 nur teilweise von dem Begrenzungselement 78 ausgefüllt. Es verbleibt ein Ausgleichsbereich 82, der ungefähr 10 Prozent eines Abstands des Befestigungselements 54 zwischen seiner Einbauposition und seiner Entnahmeposition entspricht.

Das Begrenzungselement 78 begrenzt in der Begrenzungsposition eine Relativbewegung zwischen dem Befestigungselement 54 und dem Rollogehäuse 52 derart, dass die Relativbewegung in dem Ausgleichsbereich 82 ermöglicht ist, und darüber hinaus gesperrt ist.

**Bezugszeichenliste**

| | |
|---|---|
| Abdeckvorrichtung (Stand der Technik) | 10 |
| Rollogehäuse (Stand der Technik) | 12 |
| Befestigungselement (Stand der Technik) | 14 |
| Endbereich (Stand der Technik) | 16 |
| Längsrichtung (Stand der Technik) | 18 |
| Druckfeder (Stand der Technik) | 20 |
| Betätigungshebel (Stand der Technik) | 22 |
| Drehachse (Stand der Technik) | 24 |
| Pfeil (Stand der Technik) | 26 |
| Seitenteil (Stand der Technik) | 28 |
| Aufnahme (Stand der Technik) | 30 |
| | |
| Abdeckvorrichtung | 50 |
| Rollogehäuse | 52 |
| Befestigungselement | 54 |
| Endbereich | 56 |
| Längsrichtung | 58 |
| Betätigungshebel | 62 |
| Drehachse | 64 |
| Pfeil | 66 |
| Aufnahme | 70 |
| Verschiebearm | 72 |
| Ablaufelement | 74 |
| Verschwenkrichtung | 76 |
| Begrenzungselement | 78 |
| Aussparung | 80 |
| Ausgleichsbereich | 82 |

## Patentansprüche

1. Abdeckvorrichtung (50) zur Abdeckung eines Kofferraums eines Fahrzeugs mit
einem länglichen Rollogehäuse (52) mit einem darin aufrollbar gehaltenen Rollo zur Abdeckung des Kofferraums,
wenigstens einem Befestigungselement (54), das an einem Endbereich (56) des Rollogehäuses (52) derart angeordnet ist, dass es in einer Längsrichtung des Rollogehäuses (52) gegen eine Federkraft zwischen einer vorgeschobenen Einbauposition, in der die Abdeckvorrichtung (50) mit dem wenigstens einen Befestigungselement (54) zwischen Seitenteilen des Fahrzeugs anbringbar ist, und einer zurückgezogenen Entnahmeposition, in der die Abdeckvorrichtung (50) zwischen den Seitenteilen entnehmbar ist, translatorisch bewegbar ist, und
wenigstens einem beweglich gelagerten Betätigungshebel (62), der dem wenigstens einen Befestigungselement (54) gekoppelt ist, um das Befestigungselement (54) aus der Einbauposition in die Entnahmeposition zu bewegen,
**dadurch gekennzeichnet, dass**
der Betätigungshebel (62) mit einem Begrenzungselement (78) derart gekoppelt ist, dass das Begrenzungselement (78) durch eine Bewegung des Betätigungshebels (62) zwischen einer Begrenzungsposition, in der das Begrenzungselement (78) eine Relativbewegung des Befestigungselements (54) in Richtung zu dem Rollogehäuse (52) begrenzt, und einer Freigabeposition, in der es die Relativbewegung freigibt, bewegbar ist.

2. Abdeckvorrichtung (50) nach Anspruch 1, **dadurch gekennzeichnet, dass**
die Abdeckvorrichtung (50) zwei Befestigungselemente (54) aufweist, die an beiden Endbereichen (56) des Rollogehäuses (52) angeordnet sind,
die Abdeckvorrichtung (50) zwei beweglich gelagerte Betätigungshebel (62) aufweist, wobei jeder Betätigungshebel (62) mit einem Befestigungselement (54) gekoppelt ist, um das entsprechende Befestigungselement (54) aus seiner Einbauposition in seine Entnahmeposition zu bewegen, und
jeder Betätigungshebel (62) mit einem Begrenzungselement (78) gekoppelt ist.

3. Abdeckvorrichtung (50) nach einem der Ansprüche 1 oder 2, **dadurch gekennzeichnet, dass**
das der wenigstens eine Betätigungshebel (62) verschwenkbar an dem Rollogehäuse (52) gehalten ist.

4. Abdeckvorrichtung (50) nach einem der vorhergehenden Ansprüche, **dadurch gekennzeichnet, dass**
der wenigstens eine Betätigungshebel (62) translatorisch verschiebbar an dem Rollogehäuse (52)gehalten ist.

5. Abdeckvorrichtung (50) nach Anspruch 4, **dadurch gekennzeichnet, dass**
der wenigstens eine Betätigungshebel (62) mit dem Befestigungselement (54) translatorisch verschiebbar ist.

6. Abdeckvorrichtung (50) nach einem der vorhergehenden Ansprüche, **dadurch gekennzeichnet, dass**
das Begrenzungselement (78) als Sperrstift, Haken, oder Bolzen ausgeführt ist.

7. Abdeckvorrichtung (50) nach einem der vorhergehenden Ansprüche, **dadurch gekennzeichnet, dass**
die Abdeckvorrichtung (50) wenigstens eine Aussparung (80) aufweist, in der das Begrenzungselement (78) in der Begrenzungsposition form- und kraftschlüssig aufgenommen ist.

8. Abdeckvorrichtung (50) nach einem der vorhergehenden Ansprüche, **dadurch gekennzeichnet, dass**
das Begrenzungselement (78) an dem Betätigungshebel (62) angebracht ist.

9. Abdeckvorrichtung (50) nach einem der vorhergehenden Ansprüche, **dadurch gekennzeichnet, dass**
das Begrenzungselement (78) in seiner Begrenzungsposition die Relativbewegung des Befestigungselements (54) in Richtung zu dem Rollogehäuse (52) derart begrenzt, dass die Relativbewegung in einem Ausgleichsbereich (82) ermöglicht ist, und darüber hinaus gesperrt ist.

10. Fahrzeug mit einer Abdeckvorrichtung (50) nach einem der vorhergehenden Ansprüche.
